# EUROPÄISCHE PATENTSCHRIFT

(11) **EP 2 589 103 B1**
(45) Veröffentlichungstag und Bekanntmachung des Hinweises auf die Patenterteilung: **20.01.2016**
(21) Anmeldenummer: 11728883.7
(22) Anmeldetag: 04.07.2011
(51) Int. Cl.: H01M 10/44, H01M 10/48, B60L 11/18, H02J 7/00, H01M 10/615, H01M 10/625, H01M 10/613, H01M 10/6571, H01M 10/6567

(54) **VERFAHREN ZUM STEUERN DER ENERGIEVERSORGUNG EINES ELEKTROMOTORS**
METHOD FOR CONTROLLING THE POWER SUPPLY OF AN ELECTRIC MOTOR
PROCÉDÉ PERMETTANT DE COMMANDER L'ALIMENTATION EN ÉNERGIE D'UN MOTEUR ÉLECTRIQUE

(30) Priorität: 02.07.2010 DE 102010030885
(43) Veröffentlichungstag der Anmeldung: 08.05.2013
(73) Patentinhaber: Robert Bosch GmbH, 70442 Stuttgart (DE)
(72) Erfinder: SCHMIDT, Alexander, 78166 Donaueschingen (DE)
(86) Internationale Anmeldenummer: PCT/EP2011/061231
(87) Internationale Veröffentlichungsnummer: WO 2012/001176

(56) Entgegenhaltungen:
- DE-A1- 10 302 860
- DE-A1-102008 009 568
- US-A- 5 828 201

## Beschreibung

Die vorliegende Erfindung betrifft ein Verfahren zum Steuern der Energieversorgung eines Elektromotors, insbesondere des Elektromotors eines elektrisch antreibbaren Fahrzeugs.

### Stand der Technik

Zur Reduktion der Emission von Kraftfahrzeugen werden derzeit verstärkt Antriebskonzepte für Fahrzeuge mit elektrischem Antrieb, wie etwa reine Elektrofahrzeuge oder Hybrid-elektrische Fahrzeuge (HEV), entwickelt. Der Betrieb von elektrischen Fahrzeugen im Motor- und Generatorbetrieb setzt dabei einen elektrischen Energiespeicher im Fahrzeug voraus.

Gerade bei Elektrofahrzeugen findet zur Energieversorgung ein häufiges Entladen mit anschließendem erneuten Laden der Energiespeicher statt. Durch das wiederholte Entladen und Laden des Energiespeichers wird dieser belastet und durchläuft nach einem gewissen Zeitraum einen Alterungsprozess, wodurch seine Leistung und Kapazität mit der Zeit abnimmt. Am Ende der Laufzeit kann daher ein deutlicher Leistungs- und Kapazitätsabfall zu verzeichnen sein, was einen kostspieligen Austausch des Energiespeichers notwendig macht.

Aus EP 0 913 288 B1 ist deshalb ein Verfahren bekannt, um die Ladekapazität von Antriebsbatterie-Modulen eines elektrischen Hybridfahrzeugs aufrecht zu erhalten. Dabei wird der Energiespeicher bei stehendem Fahrzeug beziehungsweise ausgeschalteter Zündung gewartet, indem allein ein einziges Modul voll aufgeladen und anschließend teilentladen wird.

### Offenbarung der Erfindung

Gegenstand der Erfindung ist ein Verfahren zum Steuern der Energieversorgung eines Elektromotors, insbesondere des Elektromotors eines elektrisch antreibbaren Fahrzeugs, wobei eine Steuereinrichtung die Energieversorgung des Elektromotors durch einen Energiespeicher steuert, und wobei der Energiespeicher eine Mehrzahl von Modulen umfasst, die durch mehrmaliges Laden und/oder Entladen belastet werden und durch die Belastung einen Alterungsprozess durchlaufen, dadurch gekennzeichnet, dass die Steuereinrichtung das Laden und/oder Entladen wenigstens zweier Module derart unterschiedlich steuert, dass diese Module eine Differenz der durch die Module fließenden Ströme aufweisen, um den Alterungsprozess des weniger belasteten Moduls selektiv zu verringern, wobei die Differenz ein Mittelwert der Differenz der durch die Module fließenden Ströme bei vollständiger Ladung bzw. Entladung ist, wobei die Module jeweils in einem Modulpfad angeordnet und parallel geschaltet sind, wobei das unterschiedliche Laden und/oder Entladen der wenigstens zwei Module durch das Einstellen eines Widerstandswerts wenigstens eines variablen in dem Modulpfad angeordneten Widerstands gesteuert wird.

Der Elektromotor wird erfindungsgemäß durch einen Energiespeicher mit Energie versorgt, der aus einer Mehrzahl von Modulen aufgebaut ist. Dadurch, dass die Steuereinrichtung das Laden und/oder Entladen wenigstens zweier Module derart unterschiedlich steuert, dass diese Module eine Belastungsdifferenz aufweisen, um den Alterungsprozess des weniger belasteten Moduls selektiv zu verringern, wird es möglich, auf die Lebensdauer einzelner Module oder einer Gruppe von Modulen selektiv Einfluss zu nehmen.

Denn neben dem sogenannten kalendarischen Altern von Energiespeichern, dass schon bei bloßer Lagerung und ohne Betrieb auftritt, altern Energiespeicher insbesondere durch die Belastung eines vermehrten Ladens beziehungsweise Entladens. Erfindungsgemäß durchlaufen die Module einen unterschiedlich starken Alterungsprozess, was bedeutet, dass wenigstens ein Modul schwächer altert als die weiteren Module. In anderen Worten steuert die Steuereinrichtung die Module selektiv derart an, dass der Alterungsverlauf einzelner oder mehrerer Module selektiv verringert wird, wohingegen andere Module verstärkt belastet werden können. Auf diese Weise wird eine Streuung im Alterungsverlauf der Module erzielt. Der Austausch einzelner Module oder einer Gruppe von Modulen wird so früher notwendig, als der Austausch anderer Module.

Erfindungsgemäß ist daher ein kontinuierlicher Austausch einzelner oder mehrerer Module möglich und notwendig. Die stärker belasteten Module beziehungs-weise das stärker belastete Modul kann so beispielsweise im Rahmen eines jährlichen Service-Intervalls zu akzeptablen Kosten ausgetauscht werden. Ferner entfällt die Notwendigkeit, zu einem bestimmten Zeitpunkt den gesamten Energiespeicher zu ersetzen, da ein herkömmlicher Energiespeicher die typische Lebensdauer eines Fahrzeugs, etwa zehn bis fünfzehn Jahre, beziehungsweise mehrere hunderttausend Kilometer, nicht erreicht. Der vergleichsweise kostengünstige Austausch einzelner oder weniger Module ist so auch in einem fortgeschrittenen Alter des Fahrzeugs problemlos durchführbar und dabei wirtschaftlich sinnvoll. Dadurch kann die wirtschaftliche Lebensdauer eines elektrisch angetriebenen Fahrzeugs von der Lebensdauer des Gesamt-Energiespeichers entkoppelt und so deutlich verlängert werden.

Darüber hinaus wird durch einen selektiv gesteuerten Alterungsprozess einzelner Module ein starker Leistungsabfall des Gesamtenergiespeichers zu einem bestimmten Zeitpunkt vermieden. Vielmehr ist der Verschleiß der einzelnen Module stets zeitlich versetzt, so dass im Mittel zu jeder Zeit ein vergleichbarer Verschleiß und damit ein stetig gleichbleibendes Leistungsvermögen vorhanden ist.

Durch einen erfindungsgemäß notwendigen sukzessiven Austausch einzelner Module wird es ferner möglich, den Energiespeicher laufend an den aktuellen Entwicklungsstand der Module anzupassen, indem stets ein älteres Modul gegen ein neues, aktuelles Modul ausgetauscht wird. Es können somit verschiedene Zellchemien beziehungsweise verschiedene Zellgenerationen in einem Energiespeicher kombiniert werden.

Dabei ist es nicht notwendig, genau auf den entsprechenden Energiespeicher angepasste Einzelmodule zu verwenden. Vielmehr ist eine herstellerübergreifende Normung der konstruktiven Ausprägung der Einzelmodule denkbar. Das bringt eine Reduzierung der Herstellungskosten mit sich, die die Einzelmodule an sich wie auch die Energiespeicher als Ganzes kostengünstiger gestalten. Dadurch kann die Akzeptanz der elektrisch angetriebenen Fahrzeuge auf dem Markt verbessert werden.

Ein weiterer Vorteil des erfindungsgemäßen Verfahrens besteht darin, dass ein aufwändiges Balancieren der einzelnen Zellen als Bestandteile der Module im Betrieb entfallen kann. Ein Balancieren der Zellen meint hier das Ausgleichen des Ladezustands und damit auch der Ruhe-Klemmenspannung einzelner Zellen zueinander. Dies erfolgt gemäß dem Stand der Technik im allgemeinen vor dem Verschalten bei der Produktion und gegebenenfalls während des Betriebs, um unterschiedliche Alterungseffekte der Zellen zu kompensieren.

Darüber hinaus kann auf diese Weise der Alterungsprozess der einzelnen Module ohne zusätzliche Arbeitsschritte bei der gewünschten Verwendung durchgeführt werden. Der Endanwender merkt dieses somit nicht, sondern die Steuereinrichtung steuert lediglich die Quelle der benötigten Energie, wenn sie im Rahmen der Verwendung des Elektromotors ohnehin benötigt wird.

Unter einer Belastungsdifferenz im Rahmen der Erfindung wird hier die Differenz der durch die Module fließenden Ströme verstanden. Dabei kann eine Belastungsdifferenz sowohl die Dauer einer (Ent-)Ladung, aber auch ihre Stärke umfassen. Dabei bezieht sich die Größe der Belastungsdifferenz auf den Mittelwert, der bei einer vollständigen (Ent-)Ladung auftritt. Denn kurzzeitig sind je nach Stromanforderung des Elektromotors auch Belastungsdifferenzen möglich, die deutlich größer oder auch deutlich kleiner sind, wie etwa bei Volllast.

Die Module sind jeweils in einem Modulpfad angeordnet und parallel geschaltet. Das ist eine besonders zweckmäßige und einfache Anordnung, um die Module unterschiedlich anzusteuern. In diesem Fall sollte jedes der Module eine ausreichende Spannung bereitstellen. Geeignete Spannungswerte liegen insbesondere in einem Bereich von 400V. Dies kann durch den Aufbau der Module aus einzelnen Zellen realisiert werden, wobei beispielswiese 100 Zellen mit einer jeweiligen Spannung von 4V seriell in jedem Modul geschaltet werden. In diesem Fall können die parallel geschalteten Module eine ausreichende Stromstärke beziehungsweise eine ausreichende elektrische Leistung liefern, um den Elektromotor anzutreiben. Geeignete Leistungen liegen insbesondere bei 20 bis 500kW.

Das unterschiedliche Laden und/oder Entladen der wenigstens zwei Module wird durch das Einstellen eines Widerstandswerts wenigstens eines variablen in dem Modulpfad angeordneten Widerstands gesteuert. Dies ist eine besonders einfache und wirkungsvolle Möglichkeit, die Module unterschiedlich zu belasten. Durch das Einstellen des Widerstandswerts wenigstens eines variablen Widerstands kann der Stromfluss durch einzelne Modulpfade selektiv vergrößert oder verkleinert werden, so dass das Laden und/oder Entladen einzelner Module exakt steuerbar ist. Besonders bevorzugt wird der Widerstandswert derart eingestellt, dass eine Belastungsdifferenz einen Wert von 20% nicht überschreitet. Insbesondere liegt die Belastungsdifferenz in einem Bereich von ≥ 10% bis ≤ 20%.

Ein weiterer Vorteil der Verwendung vnn variablen Widerständen besteht darin, dass diese Widerstände gleichermaßen dazu verwendet werden können, eventuell unterschiedliche Spannungsniveaus der einzelnen Module durch einen unterschiedlichen Widerstandswert auszugleichen. Das erfindungsgemäße Verfahren ist so sehr flexibel einsetzbar.

Darüber hinaus kommt den Widerständen eine Sicherheitsfunktion zu. Sollte in einem der Module ein Kurzschluss entstehen, kann durch eine entsprechende Regelung des Widerstands eine Unterbrechung des Stromflusses in dem jeweiligen Modulpfad erreicht werden. Dadurch kann wirksam verhindert werden, dass die weiteren Module ihre Leistung in den Kurzschluss-Modulpfad schieben und damit einen sicherheitskritischen Zustand herbeiführen.

Auf jeden Fall kann die durch die Widerstände erzeugte Wärme dazu verwendet werden, den Kaltstart des Energiespeichers zu verbessern, indem der Energiespeicher beziehungsweise die jeweiligen Module durch die in dem Widerstand erzeugte Hitze erwärmt werden.

Im Rahmen einer weiteren vorteilhaften Ausgestaltung der vorliegenden Erfindung wird das unterschiedliche Laden und/oder Entladen der wenigstens zwei Module durch jeweils einen in dem Modulpfad angeordneten Strommesser und/oder durch eine Spannungsmessung in den Modulen durch die Steuereinrichtung überprüft. Dadurch kann auf eventuelle Störeinflüsse, die das unterschiedliche Laden und/oder Entladen beeinflussen, sofort reagiert werden. Es kann so vorzugsweise ein Regelkreis ausgebildet werden, der eine selektive Belastung wie gewünscht durchführt. Es ist somit besonders bevorzugt, wenn auf Basis von Daten einer Strom- und/oder einer Spannungsmessung der Widerstandswert nachgeregelt wird.

Im Rahmen einer weiteren Ausführungsform berücksichtigt die Steuereinrichtung den unterschiedlichen Alterungszustand der einzelnen Module bei der Ausbildung der Belastungsdifferenz. Dadurch kann bei der Auswahl der Belastung der zu belastenden Module oder des zu belastenden Moduls der tatsächliche Alterungszustand einbezogen werden. Fehler, die bei einem unverhältnismäßig starken und unvorhergesehenen Alter einzelner Module auftreten und so den gezielten Alterungsvorgang stören, können so vermieden werden. Auf diese Weise steuert die Steuereinrichtung die Belastung der einzelnen Module nicht ausschließlich strikt nach einem vorbestimmten Muster, sondern kann vielmehr auf den tatsächlichen Alterungszustand der einzelnen Module reagieren. Dies kann beispielsweise wichtig sein, wenn ein Modul schneller oder langsamer altert, als ursprünglich angenommen und gewollt, was etwa durch einen Fehler in dem elektrischen System oder auch durch Herstellungsfehler oder Beschädigungen der einzelnen Module oder des Gesamt-Energiespeichers hervorgerufen werden kann.

Dabei ist es vorteilhaft, wenn die Steuereinrichtung Daten bezüglich der Spannung, der Temperatur und/oder des Stroms der Module auswertet, und dabei insbesondere die Kapazität und/oder den Innenwiderstand der Module berechnet, um den Alterungszustand der Module zu berücksichtigen. Mit diesen Daten können besonders verlässliche Rückschlüsse auf den Alterungszustand der einzelnen Module gezogen werden.

Im Rahmen einer weiteren vorteilhaften Ausgestaltung der vorliegenden Erfindung werden Module verwendet, die die gleiche Nennspannung aufweisen. Die Nennspannung bedeutet hier die mittlere Spannung eines Moduls während einer Konstant-Strom-Entladung, insbesondere innerhalb einer Dauer von 1-3 Stunden, und ist eine charakteristische Größe für ein Modul beziehungsweise für seine Zellchemie. Auf diese Weise dienen die vorzugsweise vorgesehenen Widerstände grundsätzlich lediglich zum Durchführen des selektiven Belastens beziehungsweise Alterns. Insbesondere sind die einzelnen Module dabei konstruktiv identisch. Dadurch wird ein besonders einfacher Aufbau des Energiespeichers und damit des elektrischen Systems möglich.

Die Erfindung betrifft ferner ein elektrisches System, insbesondere ein elektrisches System zum Steuern der Energieversorgung eines elektrisch antreibbaren Fahrzeugs, umfassend einen Energiespeicher, insbesondere zum Antreiben eines Elektromotors eines Fahrzeugs, wobei der Energiespeicher eine Mehrzahl von lösbar befestigten und parallel geschalteten in jeweils einem Modulpfad angeordneten Modulen umfasst, wobei jeweils in dem Modulpfad ein Widerstand mit variabel einstellbarem Widerstandswert angeordnet ist, und umfassend eine Steuereinrichtung, die geeignet ist, den Widerstandswert gezielt einzustellen.

Mit einem derartigen elektrischen System kann das erfindungsgemäße Verfahren in besonders geeigneter Weise durchgeführt werden, was zu den mit Bezug zu dem erfindungsgemäßen Verfahren genannten Vorteilen führt.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: ein erfindungsgemäßes elektrisches System zum Ausführen des erfindungsgemäßen Verfahrens;
- Fig. 2: eine teilweise aufgeschnittene Ansicht eines Moduls für einen erfindungsgemäß verwendbaren Energiespeicher.

Die Erfindung betrifft ein Verfahren zum Steuern der Energieversorgung eines Elektromotors. Darüber hinaus betrifft die Erfindung ein elektrisches System 10, mit dem die Energieversorgung eines Elektromotors, insbesondere des Elektromotors eines elektrisch antreibbaren Fahrzeugs, gesteuert wird.

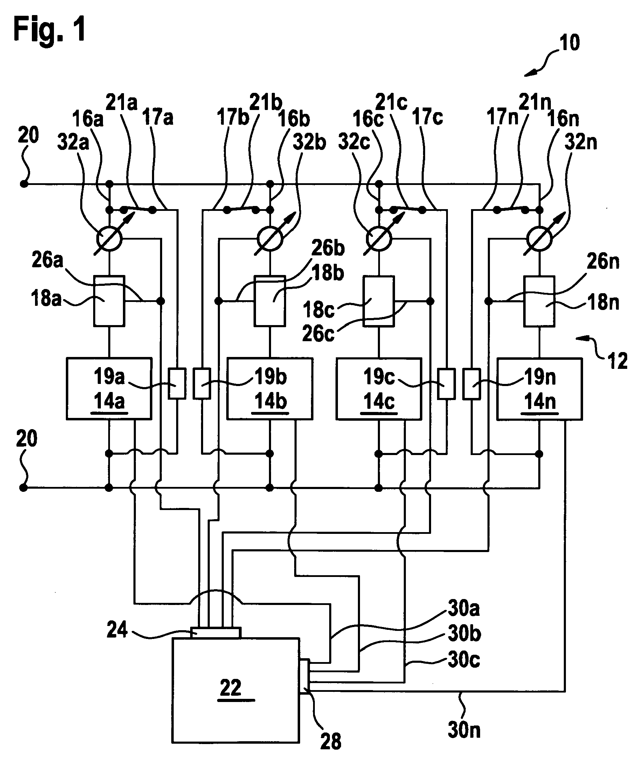

In Figur 1 ist ein erfindungsgemäßes elektrisches System 10 zum Versorgen eines Elektromotors mit Energie gezeigt. Das elektrische System 10 ist für jegliche Art von Elektromotor nutzbar. Im Folgenden wird es jedoch in nicht beschränkender Weise für den Elektromotor eines elektrisch antreibbaren Fahrzeugs beschrieben. Folglich ist das erfindungsgmäße System 10 vorzugsweise in einem Fahrzeug angeordnet, das zumindest zeitweise zumindest einen Teil des Antriebsmoments über wenigstens einen Elektromotor bezieht, und dient dazu, das Fahrzeug anzutreiben. Dabei kann dieses Fahrzeug beispielsweise sowohl ein reines Elektrofahrzeug sein, als auch ein Hybrid-elektrisches Fahrzeug (HEV).

Das elektrische System 10 umfasst einen elektrischen Energiespeicher 12. Der elektrische Energiespeicher 12 ist insbesondere eine Traktionsbatterie beziehungsweise ein Akkumulator, der durch ein Entladen den Elektromotor mit Energie versorgt. Gleichzeitig kann der Energiespeicher, etwa durch beim Bremsen gewonnene Energie, wieder aufgeladen werden. Der Energiespeicher 12 dient daher zum Antreiben eines Elektromotors und insbesondere zum Antreiben eines elektrisch antreibbaren Fahrzeugs und umfasst eine Mehrzahl von Modulen 14. Gemäß Figur 1 umfasst der Energiespeicher vier Module 14a-n. Diese Anzahl ist jedoch nicht beschränkend, vielmehr sind auch mehr oder weniger Module 14 in dem elektrischen System 10 möglich. Die Module 14 sind lösbar beispielsweise an einem Grundträger und/oder aneinander befestigt und somit problemlos austauschbar. Die Module 14 befinden sich vorzugsweise jeweils in einem Modulpfad 16, wobei die einzelnen Modulpfade 16a-n vorzugsweise parallel geschaltet sind, wie dies in Figur 1 gezeigt ist.

Die Module 14a-n weisen vorzugsweise die gleiche Nennspannung auf. Diese Nennspannung oder Klemmenspannung der Module 14 ist ausreichend für die Versorgung des Elektromotors. Vorzugsweise liegt die Nennspannung der Module 14 in einem Bereich von ≥ 12V bis ≤ 1500V, insbesondere bei 400V. Durch das Parallelschalten einer Mehrzahl von Modulen 14a-n kann eine ausreichend große Stromstärke beziehungsweise eine ausreichende elektrische Leistung bereit gestellt werden. Geeignete Leistungswerte, die erreicht werden sollten, liegen in einem zu einem Verbrennungsmotor vergleichbaren Bereich, beispielsweise in einem Bereich von 20 - 500kW, wobei ferner eine Reichweite von wenigstens 100km vorteilhaft ist.

Darüber hinaus ist in den Modulpfaden 16a-n vorzugsweise jeweils ein variabler Widerstand 18a-n vorgesehen, bei dem Widerstandswerte variabel einstellbar sind, um die Module 14a-n selektiv zu belasten, beziehungsweise ein verstärktes Altern hervorzurufen, wie dies später erläutert wird.

Um den Energiespeicher 12 mit dem Elektromotor zu verbinden, ist ein Leistungsanschluss 20 vorgesehen. Über den Leistungsanschluss 20 ist der Energiespeicher 12 insbesondere mit dem Bordnetz eines Fahrzeugs verbindbar. Unter dem Bordnetz eines Fahrzeugs wird hier das Netz verstanden über welches der Elektromotor mit Energie versorgt wird. Gegebenenfalls kann insbesondere in Abhängigkeit der Bauart des Elektromotors eine Leistungselektronik vorgesehen sein, die den durch den Energiespeicher 12 erzeugten Gleichstrom in Wechselstrom umwandelt.

Das elektrische System 10 umfasst ferner eine Steuereinrichtung 22, die die Energieversorgung des Elektromotors durch den Energiespeicher 12 steuert. Die Steuereinrichtung 22 wird daher auch als Battery Managment System bezeichnet und regelt in Antwort auf eine Stromanforderung die Versorgung eines Verbrauchers, wie etwa des Bordsystems eines Fahrzeugs, mit Strom beziehungsweise mit elektrischer Leistung. Um die Energieversorgung des Elektromotors zu steuern, weist die Steuereinrichtung 22 einen Steueranschluss 24 auf, über den die Steuereinrichtung 22 mit den variablen Widerständen 18 verbunden ist. Die Verbindung zwischen Steueranschluss 24 und variablem Widerstand 18 wird zweckmäßigerweise durch einen Steuerpfad 26 hergestellt.

Um die Lebensdauer der einzelnen Module 14a-n selektiv zu steuern und damit die Lebensdauer des Energiespeichers von der des Fahrzeugs zu entkoppeln, kann die Steuereinrichtung 22 das Laden und/oder Entladen wenigstens zweier Module 14a-n derart unterschiedlich steuern, dass diese Module 14a-n eine Belastungsdifferenz aufweisen, um den Alterungsprozess des weniger belasteten Moduls selektiv zu verringern. Dies ist beispielsweise möglich, indem die Steuereinrichtung 22 die variablen Widerstände 18a-n ansteuert, wobei sie die Widerstandswerte der Widerstände 18a-n selektiv einstellt.

Wird beispielsweise der Widerstandswert des Widerstands 18a sehr niedrig eingestellt, wohingegen die Widerstandswerte der Widerstände 18b-n sehr hoch eingestellt sind, kann durch den Modulpfad 16a ein vergleichsweise hoher Laststrom fließen, wohingegen der Stromfluss des Laststroms durch die Modulpfade 16b-n beschränkt ist. Dadurch wird das Modul 14a vergleichsweise stark entladen und auf diese Weise stärker belastet, wohingegen die Module 14b-n geschont werden. Die Widerstandswerte sind vorzugsweise einstellbar zwischen 0 Ohm und einem Wert, der den Stromfluss unterbricht, und hier als unendlich bezeichnet wird. Insbesondere sind die Widerstandswerte derart einzustellen, dass sich eine Belastungsdifferenz von im Mittel weniger als 20% ergibt.

Alternativ ist es insbesondere bei einem entladenen Modul 14a möglich, den Widerstandswert des Widerstands 18a vergleichsweise hoch, insbesondere auf unendlich zu stellen, so dass ein Stromfluss des Laststroms hier unterbrochen wird. Auf diese Weise wird es möglich, das Modul 14a praktisch nicht aufzuladen oder zu entladen, wodurch ein weiterer (Ent-)Ladevorgang im Gebrauch nicht möglich ist. Durch ein derartiges wiederholtes selektives Auslassen zumindest eines Teils eines (Ent-)Ladevorgangs wenigstens eines Moduls 14a kann dieses im Vergleich zu anderen Modulen 14h-n geschont werden, wohingegen die weiteren Module 14b-n hier stärker belastet werden beziehungsweise stärker altern. Dies ist selbstverständlich neben dem Einstellen eines variablen Widerstands 18a durch ein Unterbrechen des entsprechenden Modulpfads 16a durch einen Schalter möglich.

Dabei ist es selbstverständlich möglich, nur einzelne Module 14a selektiv stark oder schwach zu belasten, oder auch eine vorbestimmte Gruppe von Modulen 14a-n. Darüber hinaus ist die Stärke der Belastung beziehungsweise der Grad der unterschiedlichen Belastung frei wählbar. Somit ist es möglich, den Alterungsprozess einzelner Module 14a oder einer Gruppe von Modulen 14b-n frei zu wählen. Insgesamt müssen jedoch wenigstens zwei Module eine Belastungsdifferenz aufweisen.

Im Rahmen des erfindungsgemäßen Verfahrens ist es dabei möglich, dass das selektive Belasten der Module 14a-n durch die Steuereinrichtung nach einem vorbestimmten Muster abläuft, um einen vorbestimmten Alterungsverlauf der einzelnen Module 14a-n und damit eine Lebensdauer mit einer vorbestimmten und gewünschten Streuung zu erreichen.

Um jedoch den gewünschten Alterungsverlauf der Module 14 sicher einhalten zu können, weist die Steuereinrichtung 22 einen Datenanschluss 28 auf. Über den Datenanschluss 28 beziehungsweise über Datenpfade 30a-n ist die Steuereinrichtung 22 mit den Modulen 14a-n verbunden. Die Steuereinrichtung 22 kann so Informationen über Spannung und Temperatur der einzelnen Module 14a-n erhalten und daraus beispielsweise Größen wie den Innenwiderstand und/oder die Kapazität ableiten, wodurch mit Bezug auf den Alterungszustand der Module 14 geeignete Daten erhalten werden. Die Steuereinrichtung 22 umfasst daher zweckmäßigerweise eine Auswerteinheit, die aus Stromdaten, Spannungsdaten, Temperaturinformationen und/oder Innenwiderstand und Kapazität der noch ungealterten Module den Alterungszustand der Module berechnet. Dies kann beispielsweise nach einem vorgegebenen Muster erfolgen, das in der Steuereinrichtung 22, insbesondere in Abhängigkeit des Bautyps des Moduls, hinterlegt ist. So kann die Steuereinrichtung 22 den tatsächlichen Alterungszustand der einzelnen Module 14a-n bei der Ansteuerung der Widerstände 18a-n berücksichtigen und beispielsweise auf ein verhältnismäßig schnelles und/oder ungewünscht schnelles Altern reagieren. Altert ein Modul 14a zu schnell, kann die Steuereinrichtung 22 dieses Modul 14a in der Folge stärker belasten, so dass diese einen verstärkten Alterungsprozess durchlaufen, oder auch schonen, um den Alterungsverlauf zu verlangsamen. Die gewünschte Streuung der Lebensdauer der einzelnen Module14a-n kann so wie gewünscht und unabhängig von Störeinflüssen eingehalten werden.

Darüber hinaus kann durch eine Rückkopplung von Steuereinrichtung 22 und Modul 14a-n dem Benutzer des Energiespeichers, also insbesondere dem Fahrer des elektrisch angetriebenen Fahrzeugs, angezeigt werden, wenn ein oder mehrere Module 14a-n einen vorbestimmten Alterungszustand erreicht haben. Dabei kann eine Meldung bei jedem wählbaren Alterungszustand abgegeben werden, so dass der Benutzer auf den bald notwendig werdenden Austausch von einem oder mehreren Modulen 14 aufmerksam gemacht wird. Ferner kann dem Benutzer angezeigt werden, wenn ein oder mehrere Module14a-n keine ausreichende Leistung und/oder Kapazität mehr zur Verfügung stellen können. Dies kann beispielsweise aufgrund von Alterungseffekten oder bei sonstigen Störfällen auftreten.

Es ist ferner von Vorteil, wenn in den jeweiligen Modulpfaden 16a-n Strommessgeräte 32a-n angeordnet sind. Diese Strommessgeräte 32a-n können den in dem jeweiligen Modulpfad 16a-n fließenden Strom messen und so ebenfalls Hinweise zum Alterungszustand der Batterie geben. Darüber hinaus kann aufgrund der Strommessung die Einstellung des Widerstandswertes überprüft werden. Sollten sich so beispielsweise in dem Modulpfad 16 weitere Widerstände gebildet haben oder der Widerstand nicht richtig arbeiten, ist so der Aufbau eines Regelkreises möglich, durch den die Steuereinrichtung 22 die Belastung der Module 14 trotz etwaiger Störeinflüsse konstant hält. Dazu sind die Strommessgeräte 32a-n zweckmäßigerweise über die Datenpfade 30a-n oder über separate Datenpfade mit der Steuereinrichtung 22 verbunden.

Das elektrische System 10 kann darüber hinaus mit den Widerständen 18 vergleichbare variable Widerstände 19 aufweisen, die in einem jeweiligen mit dem Modulpfad 16 verbundenen Parallelpfad 17 angeordnet sind. Diese variablen Widerstände 19 können dazu verwendet werden, die einzelnen Module 14a-n beziehungsweise deren Zellen zu balancieren, also den Ladezustand beziehungsweise die Klemmenspannung der einzelnen Module 14a-n zueinander in gewünschter Weise anzugleichen. Während des Balancierungsvorgangs ist der zum Modul 14a in Serie geschaltete Widerstand 18a vorzugsweise auf seinen maximalen Wert, insbesondere auf unendlich, eingestellt, so dass benachbarte Module 14b-n von diesem Vorgang ausgeschlossen sind. Zweckmäßigerweise ist in dem Parallelpfad 17 ein Schalter 21 zum Unterbrechen des Stromflusses angeordnet. In einer alternativen Ausgestaltung können die Widerstände 19 auch als kapazitiv oder induktiv wirkende Bauelemente ausgeführt sein, so dass zumindest ein Teil der Balancierungsenergie wieder in das Bordnetz oder in die Module 14 zurückgespeist werden kann.

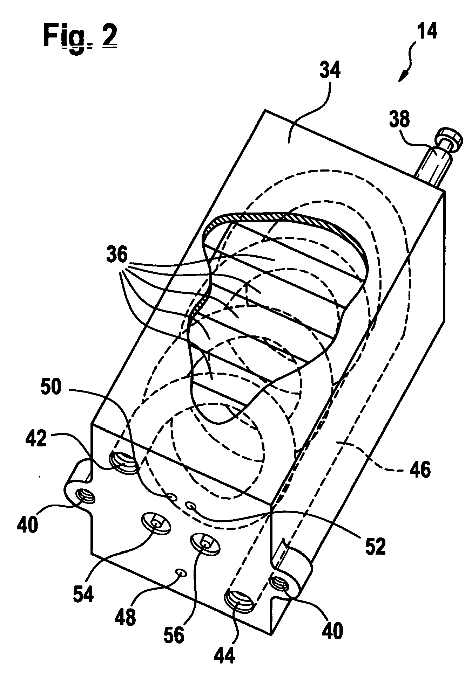

In Figur 2 ist ein beispielhaftes Modul 14 gezeigt, das für ein erfindungsgemäßes elektrisches System 10 beziehungsweise zur Verwendung in einem erfindungsgemäßen Verfahren verwendbar ist. Das Modul 14 umfasst ein Gehäuse 34, in dem eine Mehrzahl an funktionalen Einheiten beziehungsweise Zellen 36 angeordnet sind. Aufgrund ihrer im Vergleich zu anderen Batteriesystemen hohen Energiedichte werden für einen erfindungsgmäßen Einsatz Lithium-Ionen-Zellen favorisiert, wobei jedes Modul 14 vorzugsweise nur eine Zellsorte umfasst.

Das Modul 14 kann dabei einen Sicherheitsschalter 38 (safety plug) zum sofortigen Spannungsfreischalten aufweisen. Dadurch ist es zum einen möglich, bei einem Fehler in dem elektrischen System 10 und/oder zu Wartungsarbeiten die Spannung des Energiespeichers 12 sofort auf null zu bringen, wodurch ein Gefährdungspotential mit Bezug auf Beschädigungen des elektrischen Systems 10 wie auch Verletzungen von Personen vermindert werden können. Darüber hinaus kann durch einen derartigen Sicherheitsschalter 38 der Austausch einzelner Module 14 vereinfacht werden.

Um einen Austausch einzelner Module 14 zu erleichtern, weist das Modul 14 insbesondere an seinem Gehäuse 34 eine schnell lösbare Verbindung zum Gesamtspeicher beziehungsweise Energiespeicher 12 auf. Diese Verbindung kann beispielsweise als Steckverbindung oder Schraubverbindung 40 ausgebildet sein, um das Modul 14 beispielsweise an einem Grundträger und/oder an einem anderen Modul 14 zu befestigen.

Für einen Temperaturausgleich umfasst das Modul 14 ferner einen Eingang 42 sowie einen Ausgang 44 für ein Klimatisierungsfluid. Um das Fluid in dem Modul 14 zu leiten, sind ferner innerhalb des Gehäuses 34 und verbunden mit dem Eingang 42 und dem Ausgang 44 entsprechende Kanäle 46 angeordnet. Insbesondere, um das Einführen des Klimatisierungsfluids zu steuern ist ferner ein Messanschluss 48 für eine Temperaturmessung vorgesehen. In einer alternativen Ausführungsform könnte das Klimatisierungsfluid auch um das Modul 14 herum geleitet werden, wobei das Klimatisierungsfluid dann durch mehre Kanäle direkt zu der Moduloberfläche geführt werden könnte.

Insbesondere für eine Verbindung mit der Steuereinrichtung 22 weist das Modul 14 Messanschlüsse 50, 52 für eine Spannungsmessung auf. Diese werden beispielswese als sens+ und sens- Anschlüsse bezeichnet. Mit diesen Anschlüssen kann die Spannung gemessen werden und dadurch der einzuregelnde Widerstandswert des Widerstands 18 berechnet werden. Der Widerstand 18 kann dabei innerhalb des Gehäuses 34 angeordnet sein oder auch außerhalb des Gehäuses 34. Wesentlich ist, dass bei der Verwendung von Widerständen 18 jedem Modulpfad 16 ein Widerstand 18 zugeordnet ist.

Schließlich weist das Modul zur Leistungsabgabe elektrische Anschlüsse 54, 56 auf, die mit dem Leistungsanschluss 20 verbunden sind. Auch an diesen Anschlüssen ist eine Spannungsmessung möglich.

## Patentansprüche

1. Verfahren zum Steuern der Energieversorgung eines Elektromotors, insbesondere des Elektromotors eines elektrisch antreibbaren Fahrzeugs, wobei eine Steuereinrichtung (22) die Energieversorgung des Elektromotors durch einen Energiespeicher (12) steuert, und wobei der Energiespeicher (12) eine Mehrzahl von Modulen (14) umfasst, die durch mehrmaliges Laden und/oder Entladen belastet werden und durch die Belastung einen Alterungsprozess durchlaufen, **dadurch gekennzeichnet, dass** die Steuereinrichtung (22) das Laden und/oder Entladen wenigstens zweier Module derart unterschiedlich steuert, dass diese Module eine Differenz der durch die Module fließenden Ströme aufweisen, um den Alterungsprozess des weniger belasteten Moduls selektiv zu verringern, wobei die Differenz ein Mittelwert der Differenz der durch die Module fließenden Ströme bei vollständiger Ladung bzw. Entladung ist, wobei die Module (14) jeweils in einem Modulpfad (16) angeordnet und parallel geschaltet sind, wobei das unterschiedliche Laden und/oder Entladen der wenigstens zwei Module (14) durch das Einstellen eines Widerstandswerts wenigstens eines variablen in dem Modulpfad (16) angeordneten Widerstands (18) gesteuert wird.

2. Verfahren nach Anspruch 1, **dadurch gekennzeichnet, dass** der Widerstandswert derart eingestellt wird, dass die Differenz der durch die Module fließenden Ströme einen Wert von 20% nicht überschreitet.

3. Verfahren nach einem der Ansprüche 1 oder 2, **dadurch gekennzeichnet, dass** das unterschiedliche Laden und/oder Entladen der wenigstens zwei Module (14) durch jeweils einen in dem Modulpfad (16) angeordneten Strommesser (32) und/oder durch eine Spannungsmessung in den Modulen (16) durch die Steuereinrichtung (22) überprüft wird.

4. Verfahren nach Anspruch 3, **dadurch gekennzeichnet, dass** auf Basis von Daten einer Strommessung und/oder einer Spannungsmessung der Widerstandswert nachgeregelt wird.

5. Verfahren nach einem der Ansprüche 1 bis 4, **dadurch gekennzeichnet, dass** die Steuereinrichtung (22) den unterschiedlichen Alterungszustand der einzelnen Module (14) bei der Auswahl der Belastung der zu belastenden Module oder des zu belastenden Moduls berücksichtigt.

6. Verfahren nach Anspruch 5, **dadurch gekennzeichnet, dass** die Steuereinrichtung (22) Daten bezüglich der Spannung, der Temperatur und/oder des Stroms der Module (14) auswertet, und dabei insbesondere die Kapazität und/oder den Innenwiderstand der Module berechnet, um den Alterungszustand der Module (14) zu berücksichtigen.

7. Verfahren nach einem der Ansprüche 1 bis 6, **dadurch gekennzeichnet, dass** Module (14) verwendet werden, die die gleiche Nennspannung aufweisen.

8. Elektrisches System, insbesondere elektrisches System zum Steuern der Energieversorgung eines elektrisch antreibbaren Fahrzeugs, umfassend einen Energiespeicher (12), insbesondere zum Antreiben eines Elektromotors eines Fahrzeugs, wobei der Energiespeicher (12) eine Mehrzahl von lösbar befestigten und parallel geschalteten in jeweils einem Modulpfad (16) angeordneten Modulen (14) umfasst, wobei jeweils in dem Modulpfad (16) ein Widerstand (18) mit variabel einstellbarem Widerstandswert angeordnet ist, und umfassend eine Steuereinrichtung (22), die geeignet ist, den Widerstandswert gezielt einzustellen.

## Claims

1. Method for controlling the power supply of an electric motor, in particular the electric motor of a vehicle that can be electrically driven, wherein a control device (22) controls the power supply of the electric motor via an energy store (12), and wherein the energy store (12) comprises a plurality of modules (14), which experience stress through repeated charging and/or discharging and undergo an aging process as a result of the stress, **characterized in that** the control device (22) controls the charging and/or discharging of at least two modules differently such that these modules have a difference in the currents flowing through the modules in order to selectively reduce the aging process of the module that is subjected to less stress wherein the difference is an average value of the difference in the currents flowing through the modules during complete charging and/or discharging, wherein the modules (14) are respectively arranged in a module circuit (16) and connected in parallel wherein the different level of charging and/or discharging of at least two of the modules (14) is controlled by setting a resistance value of at least one variable resistor (18) arranged in the module circuit (16).

2. Method according to Claim 1, **characterized in that** the resistance value is set such that the difference in the currents flowing through the modules does not exceed a value of 20%.

3. Method according to either of Claims 1 and 2, **characterized in that** the different level of charging and/or discharging of at least two of the modules (14) is checked by the control device (22) via an ammeter (32) arranged in each module circuit (16) and/or via a voltage measurement in the modules (16).

4. Method according to Claim 3, **characterized in that** the resistance value is readjusted based on data obtained from a current measurement and/or a voltage measurement.

5. Method according to one of Claims 1 to 4, **characterized in that** the control device (22) takes into account the varying state of aging of the individual modules (14) when selecting the stress of the module(s) to be stressed.

6. Method according to Claim 5, **characterized in that** the control device (22) evaluates data relating to the voltage, the temperature, and/or the current of the modules (14), and particularly calculates the capacity and/or the inner resistance of the modules, in order to take into account the state of aging of the modules (14).

7. Method according to one of Claims 1 to 6, **characterized in that** modules (14) are used that have the same nominal voltage.

8. Electrical system, in particular an electrical system for controlling the power supply of a vehicle that can be electrically driven, comprising an energy store (12), in particular for driving an electric motor of a vehicle, wherein the energy store (12) comprises a plurality of modules (14) that are removably fastened and connected in parallel and each arranged in a module circuit (16), wherein a resistor (18) having a variably adjustable resistance value is arranged in each module circuit (16), and comprising a control device (22) that is suitable for adjusting the resistance value in a targeted manner.

## Revendications

1. Procédé pour la commande de l'alimentation en énergie d'un moteur électrique, en particulier du moteur électrique d'un véhicule pouvant être entraîné électriquement, dans lequel un dispositif de commande (22) commande l'alimentation en énergie du moteur électrique grâce à un accumulateur d'énergie (12), et dans lequel l'accumulateur d'énergie (12) comprend une pluralité de modules (14) qui sont sollicités par des charges et/ou décharges répétées et sont soumis à un processus de vieillissement du fait de la sollicitation, **caractérisé en ce que** le dispositif de commande (22) commande la charge et/ou décharge d'au moins deux modules avec une différence telle que ces modules présentent une différence entre les courants circulant à travers ces modules afin de réduire sélectivement le processus de vieillissement du module moins sollicité, la différence étant une valeur moyenne de la différence entre les courants circulant à travers les modules en cas de charge ou décharge complète, les modules (14) étant respectivement disposés sur un trajet de module (16) et étant connectés en parallèle, la différence de charge et/ou de décharge des au moins deux modules (14) étant commandée grâce au réglage d'une valeur de résistance d'au moins une résistance variable (18) disposée sur le trajet de module (16).

2. Procédé selon la revendication 1, **caractérisé en ce que** la valeur de résistance est réglée de telle sorte que la différence entre les courants circulant à travers les modules ne dépasse pas une valeur de 20%.

3. Procédé selon l'une des revendications 1 ou 2, **caractérisé en ce que** la différence de charge et/ou décharge des au moins deux modules (14) est contrôlée respectivement par un ampèremètre (32) disposé sur le trajet de module (16) et/ou grâce à une mesure de la tension dans les modules (16) par le dispositif de commande (22).

4. Procédé selon la revendication 3, **caractérisé en ce que**, sur la base de données d'une mesure de courant et/ou d'une mesure de tension, la valeur de résistance est réajustée.

5. Procédé selon l'une des revendications 1 à 4, **caractérisé en ce que** le dispositif de commande (22) tient compte de la différence d'état de vieillissement des modules individuels (14) lors du choix de la sollicitation des modules à solliciter ou du module à solliciter.

6. Procédé selon la revendication 5, **caractérisé en ce que** le dispositif de commande (22) évalue des données concernant la tension, la température et/ou le courant des modules (14) et calcule ce faisant en particulier la capacité et/ou la résistance interne des modules afin de tenir compte de l'état de vieillissement des modules (14).

7. Procédé selon l'une des revendications 1 à 6, **caractérisé en ce que** l'on utilise des modules (14) qui présentent la même tension nominale.

8. Système électrique, en particulier système électrique pour commander l'alimentation en énergie d'un véhicule pouvant être entraîné électriquement, comprenant un accumulateur d'énergie (12), en particulier pour entraîner un moteur électrique d'un véhicule, dans lequel l'accumulateur d'énergie (12) comprend une pluralité de modules (14) fixés de manière détachable et connectés en parallèle, disposés à chaque fois sur un trajet de module (16), dans lequel, sur le trajet de module (16), une résistance (18) avec une valeur de résistance réglable de manière variable est à chaque fois disposée, et comprenant un dispositif de commande (22) qui est adapté pour régler de manière ciblée la valeur de résistance.
